# DEMANDE DE BREVET EUROPEEN

(11) **EP 2 302 276 A1**
(43) Date de publication de la demande: **30.03.2011**
(21) Numéro de dépôt: 10180858.2
(22) Date de dépôt: 28.09.2010
(51) Int. Cl.: F16L 53/00

(54) **Dispositif de chauffage d'une ligne de transfert de fluide**

(30) Priorité: 29.09.2009 FR 0904632
(71) Demandeur: HUTCHINSON, 75008 Paris (FR)
(72) Inventeur: Sinault, Yann, 45200 Montargis (FR); Godeau, Denis, 45260 Vieilles Maisons (FR); Benard, Thierry, 45430 Checy (FR)
(74) Mandataire: Bolinches, Michel Jean-Marie

(57) **Abrégé**

Dispositif de chauffage (1) d'une ligne (L) de transfert de fluide comportant au moins un tuyau et au moins deux raccords à chauffer de ce(s) tuyau(x) montés en des extrémités de la ligne, comprenant :
- ces raccords (3 et 4) qui comprennent au moins un premier raccord (5) en une extrémité (L1) et en option entre deux tuyaux consécutifs, et un second raccord (6) en une extrémité (L2),
- au moins une paire d'éléments métalliques chauffants (14₁ et 14₂) pour le ou chaque tuyau et connectés au ou à chaque premier raccord, la paire d'éléments chauffants adjacente à la seconde extrémité étant connectée en outre au second raccord, et
- des moyens d'alimentation électrique (12₁ et 12₂) agencés pour alimenter le premier raccord en la première extrémité.
Selon l'invention, le ou chaque premier raccord (5) incorpore des moyens de connexion électrique (5₁, 5₂) connectés aux éléments chauffants pour les relier aux moyens d'alimentation, et le second raccord (6) incorpore des moyens de fermeture (6₁₂) du circuit formé par la ou les paire(s) d'éléments chauffants et par ces moyens de connexion, de sorte que le ou chaque tuyau chauffe les raccords correspondants via ces moyens de connexion et de fermeture.

## Description

La présente invention concerne un dispositif de chauffage d'une ligne de transfert de fluide comportant au moins un tuyau et au moins deux raccords de ce(s) tuyau(x) montés en une première et une seconde extrémités opposées de la ligne. L'invention s'applique notamment à une ligne de transfert de fluide pour véhicule automobile dont le contenu nécessite d'être chauffé.

D'une manière générale, les connectiques rapides des véhicules automobiles ont pour fonction de connecter les tuyaux de transfert de fluide aux organes du moteur. Or, de nombreux organes d'un véhicule automobile doivent être chauffés notamment au démarrage, pour des raisons d'efficacité, de pollution et/ou de confort des passagers. Pour ce faire, on peut chauffer au choix le tuyau, le raccord rapide ou bien les deux à la fois via deux dispositifs de chauffage distincts, ce dernier cas présentant l'inconvénient de requérir des connectiques électriques séparées pour chauffer le tuyau et le raccord et éventuellement des dispositifs de protection contre la surchauffe et/ou des dispositifs d'autorégulation différents pour le tuyau et pour le raccord.

On peut par exemple citer le document WO-A2-2008/151924 qui enseigne d'enrouler en hélice deux fils chauffants le long d'un tuyau et de disposer les extrémités de ces fils dans un raccord rapide pour chauffer également ce raccord.

Un but de la présente invention est de proposer un dispositif de chauffage d'une ligne de transfert de fluide, cette ligne comportant au moins un tuyau et au moins deux raccords à chauffer de ce(s) tuyau(x) montés en une première et une seconde extrémités opposées de la ligne, ce dispositif permettant de remédier à cet inconvénient et comprenant :
- ces raccords qui comprennent au moins un premier raccord destiné à être monté en ladite première extrémité et optionnellement entre deux tuyaux consécutifs dans le cas de tuyaux connectés en série, et un unique second raccord destiné à être monté en ladite seconde extrémité,
- au moins une paire d'éléments métalliques chauffants (tels que des fils, à titre non limitatif) qui sont destinés à être disposés le long du ou de chaque tuyau et qui sont connectés au ou à chaque premier raccord, la paire d'éléments chauffants adjacente à ladite seconde extrémité étant connectée en outre au second raccord, et
- des moyens d'alimentation électrique agencés pour alimenter le premier raccord en ladite première extrémité.

A cet effet, un dispositif selon l'invention est tel que le ou chaque premier raccord incorpore des moyens de connexion électrique qui sont connectés à la paire correspondante d'éléments chauffants pour la relier électriquement aux moyens d'alimentation, et que l'unique second raccord incorpore des moyens de fermeture du circuit électrique formé par la ou les paire(s) d'éléments chauffants et par ces moyens de connexion, de telle sorte que le ou chaque tuyau chauffe les raccords correspondants via ces moyens de connexion et de fermeture.

On notera que dans le dispositif de l'invention, ce sont les élements chauffants disposés le long du ou de chaque tuyau qui chauffent essentiellement par conduction thermique et/ou par effet Joule ces moyens de connexion et de fermeture et donc les raccords correspondants, A ce titre, ces moyens de connexion et de fermeture sont réalisés en un matériau approprié pour favoriser cette conduction thermique.

On notera également que les raccords ainsi chauffés du dispositif selon l'invention peuvent être tous inserts ou embouts utilisables pour un raccordement, comme par exemple un simple embout mâle ou femelle équipé de ces moyens de connexion ou de ces moyens de fermeture, ou encore un élément d'une connectique rapide.

On notera en outre que le matériau de ces premier et second raccords à chauffer selon l'invention peut être prévu pour faciliter le transfert thermique par conduction en provenance des éléments chauffants, s'agissant par exemple d'un plastique conducteur thermique, à titre non limitatif.

Avantageusement, ces moyens de connexion électrique et de fermeture du circuit sont ainsi aptes à être chauffés par n tuyau(x) (n entier égal ou supérieur à 1) de la ligne, par l'intermédiaire de :
- liaisons électriques entre, d'une part, la paire d'éléments chauffants du ou de chaque tuyau et, d'autre part, ces moyens de connexion électrique ou ces moyens de fermeture selon la position du tuyau dans la ligne, et de
- câbles électriques que comprennent les moyens d'alimentation et qui sont connectés aux moyens de connexion électrique du premier raccord à chauffer en ladite première extrémité de ligne.

Dans le cas où n est égal ou supérieur à deux (i.e. pour au moins deux tuyaux), deux tuyaux consécutifs sont reliés entre eux via les moyens de connexion électrique respectifs qui équipent deux premiers raccords intermédiaires adjacents à chauffer et qui sont eux-mêmes reliés électriquement entre eux par deux connecteurs électriques accouplés.

Selon une autre caractéristique de l'invention, lesdits moyens de connexion électrique peuvent comporter deux cosses métalliques séparées entre elles qui sont respectivement reliées, d'une part, aux deux câbles électriques et, d'autre part, aux deux éléments chauffants de ladite ou de chaque paire par lesdites liaisons électriques, et lesdits moyens de fermeture du circuit peuvent alors comporter une unique cosse métallique qui est reliée aux deux éléments chauffants correspondants.

De préférence, chacune desdites cosses est en forme de secteur de cylindre monté autour du raccord à chauffer correspondant et est calée dans une gorge circonférentielle de ce dernier, les deux cosses que comportent lesdits moyens de connexion électrique étant diamétralement opposées.

Avantageusement, la ou chaque liaison électrique dont est pourvue chaque cosse pour recevoir un élément chauffant peut être solidaire de cette cosse et la prolonger axialement vers le raccord à chauffer adjacent.

Selon une autre caractéristique de l'invention, l'une au moins desdites cosses peut supporter en outre un composant de protection thermique et/ou un autre composant chauffant par exemple à coefficient de température positif, de sorte à assurer une protection contre la surchauffe, une autorégulation de la température dans la ligne et/ou à ajouter localement de la puissance de chauffe, respectivement.

Selon une autre caractéristique de l'invention, chacun des premier(s) et second raccords à chauffer muni de la ou des cosse(s) correspondante(s) peut être recouvert d'une douille électriquement isolante définissant l'enveloppe radialement externe du raccord correspondant, et est avantageusement pourvu d'un embout axial de raccordement par emmanchement au tuyau correspondant. Cette douille peut être prévue étanche, et elle peut être au choix surmoulée ou rapportée, en étant dans ce dernier cas adhérisée ou non.

Selon une autre caractéristique optionnelle de l'invention, un raccord rapide encliquetable peut être monté via cette douille sur l'un au moins de ces raccords à chauffer pour former une connectique rapide, ce raccord rapide étant optionnellement pourvu d'un dispositif témoin de bonne connexion d'un embout mâle dans ce raccord rapide.

De préférence, ladite ou chaque paire d'éléments chauffants comporte deux fils chauffants enroulés en hélice cylindrique qui sont de préférence destinés à être montés radialement à l'extérieur du tuyau correspondant.

Selon un autre aspect de l'invention, ledit dispositif de chauffage incorpore en outre le ou chaque tuyau à chauffer de ladite ligne, lequel tuyau est de préférence réalisé en une matière plastique.

A titre encore plus préférentiel, ladite ou chaque paire de fils chauffants sont enroulés en hélice cylindrique radialement à l'extérieur et au contact du tuyau correspondant, un manchon thermiquement isolant enserrant le ou chaque tuyau pourvu de ces fils. Avantageusement, cette douille relie alors ledit raccord rapide encliquetable à ce manchon, rendant ainsi solidaire le tuyau correspondant du raccord rapide.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en coupe axiale d'un dispositif de chauffage selon un exemple de l'invention en relation avec un tuyau de la ligne à chauffer, seul le premier raccord à chauffer définissant une première extrémité de ligne y étant visible,
la figure 2 est une vue en perspective d'un dispositif de chauffage selon le principe de la figure 1, dans le cas d'une ligne à un seul tuyau (non représenté) montrant en outre le second raccord à chauffer en une seconde extrémité de ligne,
la figure 3 est une vue schématique en plan montrant un dispositif de chauffage selon une variante de la figure 2 généralisant l'invention à une ligne à deux tuyaux connectés en série, illustrant l'insertion entre les première et seconde extrémités de ligne de deux autres premiers raccords destinés à relier ces deux tuyaux entre eux en étant chauffés par ces derniers, et
la figure 4 est une vue schématique partielle en perspective détaillant le dispositif de la figure 3, les deux tuyaux qui chauffent les deux raccords intermédiaires et les deux raccords d'extrémité n'étant pas visibles.

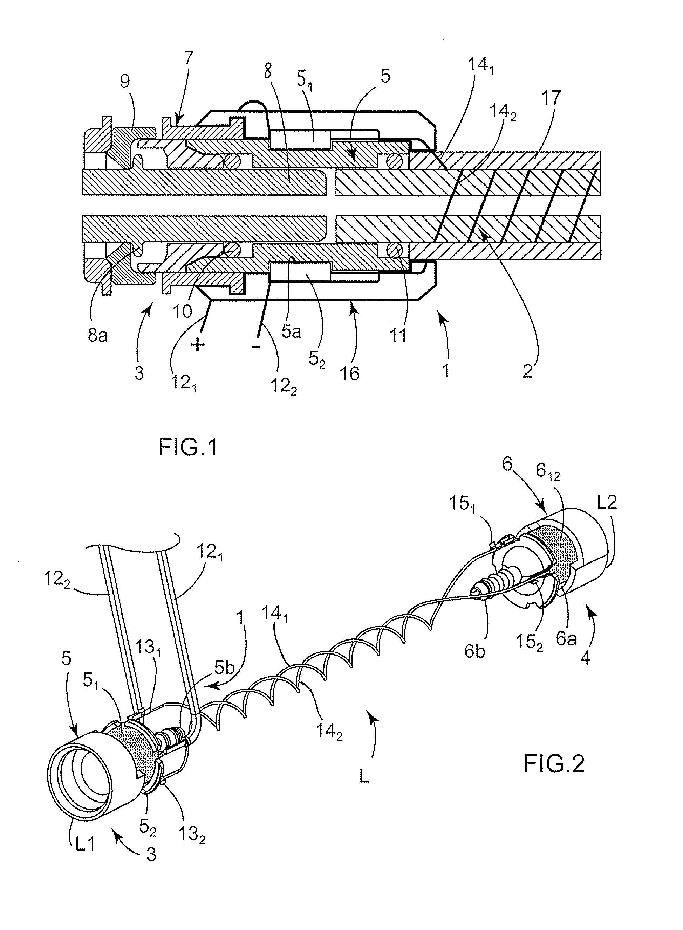

Le dispositif de chauffage 1 selon les figures 1 et 2 est prévu pour chauffer à la fois un tuyau unique 2 et deux première et seconde connectiques rapides 3 et 4 à premier et second raccords à chauffer 5 et 6, respectivement, entre lesquelles est monté ce tuyau 2 et qui définissent ainsi les première et seconde extrémités opposées L1 et L2 de la ligne L de transfert de fluide. Comme indiqué précédemment, on notera que ces raccords 5 et 6 pourraient être de simples inserts de raccordement comme par exemple des embouts mâles, en lieu et place de ces connectiques rapides 3 et 4.

Dans l'exemple de la figure 1, le premier raccord à chauffer 5 est utilisé en relation avec un raccord rapide encliquetable 7 dans lequel on vient verrouiller un embout mâle 8 muni d'une saillie périphérique 8a de verrouillage et qui est pourvu d'un dispositif témoin de bonne connexion 9 de cet embout mâle 8 dans le raccord rapide 7. On pourra par exemple utiliser pour ce dispositif témoin 9 celui décrit dans le Brevet EP-B1-1 770 321 ou dans la Demande de Brevet déposée sous le n° FR0902113, tous deux au nom de la Demanderesse. Comme visible à la figure 1, un premier joint d'étanchéité 10 est dans cet exemple interposé radialement entre le raccord 5 et cet embout mâle 8, et un second joint d'étanchéité 11 est interposé radialement entre ce raccord 5 et le tuyau 2.

Ce premier raccord à chauffer 5 (visible à gauche sur la figure 2) présente une gorge circonférentielle 5a sur laquelle sont par exemple soudées ou serties deux cosses métalliques chauffantes 5₁ et 5₂ chacune en forme d'arc de cylindre dont les bords épousent ceux de la gorge et qui sont espacées sur la circonférence de celle-ci en y étant diamétralement opposées (ces cosses 5₁ et 5₂ pouvant être montées autrement que par soudage ou sertissage). Ces cosses 5₁ et 5₂ sont respectivement reliées, d'une part, à deux câbles d'alimentation électrique 12₁ et 12₂ et, d'autre part, par des liaisons électriques 13₁ et 13₂ à deux fils chauffants 14₁ et 14₂ destinés à être disposés le long du tuyau 2. De plus, ce raccord 5 est pourvu en son extrémité axiale tournée vers le tuyau 2 d'un embout de raccordement 5b à ce tuyau 2 par exemple en forme de queue de sapin.

Quant au second raccord à chauffer 6 (visible à droite sur la figure 2), il incorpore des moyens de fermeture du circuit formés d'une unique cosse métallique 6₁₂ en arc de cylindre qui est par exemple soudée ou sertie sur une gorge 6a de ce raccord 6 à l'instar des deux cosses 5₁ et 5₂ du raccord 5, et qui ferme le circuit électrique du fait qu'elle est à elle seule reliée aux deux extrémités adjacentes des fils chauffants 14₁ et 14₂ par des liaisons électriques 15₁ et 15₂. De plus, ce raccord 6 est pourvu en son extrémité axiale tournée vers le tuyau 2 d'un embout de raccordement 6b à ce tuyau 2 analogue au précédent.

Les liaisons électriques 13₁, 13₂, 15₁, 15₂ entre chaque cosse 5₁, 5₂, 6₁₂ et le ou les fils chauffants 14₁ et 14₂ sont dans cet exemple de type broches prolongeant axialement la cosse correspondante 5₁, 5₂, 6₁₂ vers le raccord à chauffer opposé 5, 6. Il convient néanmoins de noter que ces liaisons 13₁, 13₂, 15₁, 15₂ pourraient être de structure différente, pourvu que les fils chauffants 14₁ et 14₂ soient aptes à être alimentés électriquement par le courant amené par les deux câbles 12₁ et 12₂ (lesquels pourraient bien entendu être agencés d'une manière différente de celle illustrée à la figure 2, étant entendu qu'il faut et il suffit que ces câbles 12₁ et 12₂ définissent des pôles + et - en relation avec les deux cosses 5₁ et 5₂ du premier raccord 5).

Comme illustré à la figure 1, les deux fils chauffants 14₁ et 14₂ sont de préférence enroulés en hélice cylindrique sur la face radialement externe du tuyau 2, lequel peut être réalisé en une matière thermoplastique telle qu'un polyamide (par exemple du PA12), à titre non limitatif. On notera toutefois qu'il serait possible dans le cadre de la présente invention de prévoir cet enroulement de fils chauffants 14₁ et 14₂ ailleurs qu'à l'extérieur du tuyau 2, par exemple dans la paroi de ce dernier.

Comme également illustré à la figure 1, ce raccord à chauffer 5 et les cosses 5₁ et 5₂ qu'il incorpore est recouvert d'une douille 16 électriquement isolante qui définit l'enveloppe radialement externe de la connectique rapide 3 correspondante et qui, dans cet exemple de réalisation, assure la fixation de cette connectique 3 au tuyau 2 en venant enserrer un manchon souple isolant thermique 17 monté autour de ce tuyau 2 de sorte à entourer les fils chauffants 14₁ et 14₂ axialement jusqu'à l'extrémité en regard de cette douille 16.

De cette manière, on comprend que l'alimentation électrique de chacune des deux cosses 5₁ et 5₂ du premier raccord 5, lesquelles cosses 5₁ et 5₂ sont respectivement connectées électriquement aux deux fils 14₁ et 14₂ longeant le tuyau 2, permet :
- de chauffer le tuyau 2 du fait que ces cosses 5₁ et 5₂ alimentées électriquement sont respectivement reliées aux fils 14₁ et 14₂ et que la cosse unique 6₁₂ équipant le second raccord 6 ferme le circuit électrique, puis de chauffer ces cosses 5₁, 5₂, 6₁₂ et donc les raccords 5 et 6 les incorporant, et éventuellement
- de faire en sorte que ces cosses 5₁, 5₂, 6₁₂ servent de support à un composant de protection thermique (par exemple « PTC », i.e. à coefficient de température positif, non illustré) et/ou servent de support à un autre composant chauffant (également « PTC », par exemple).

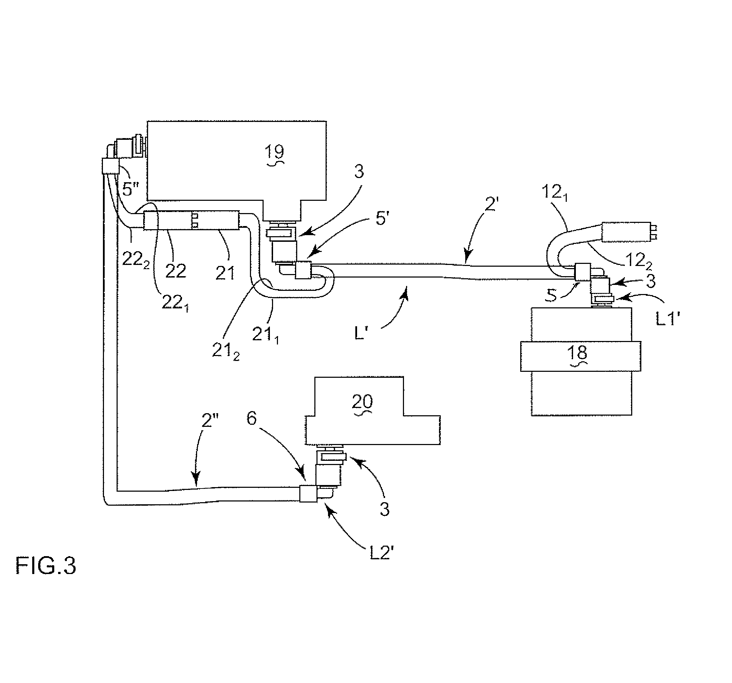

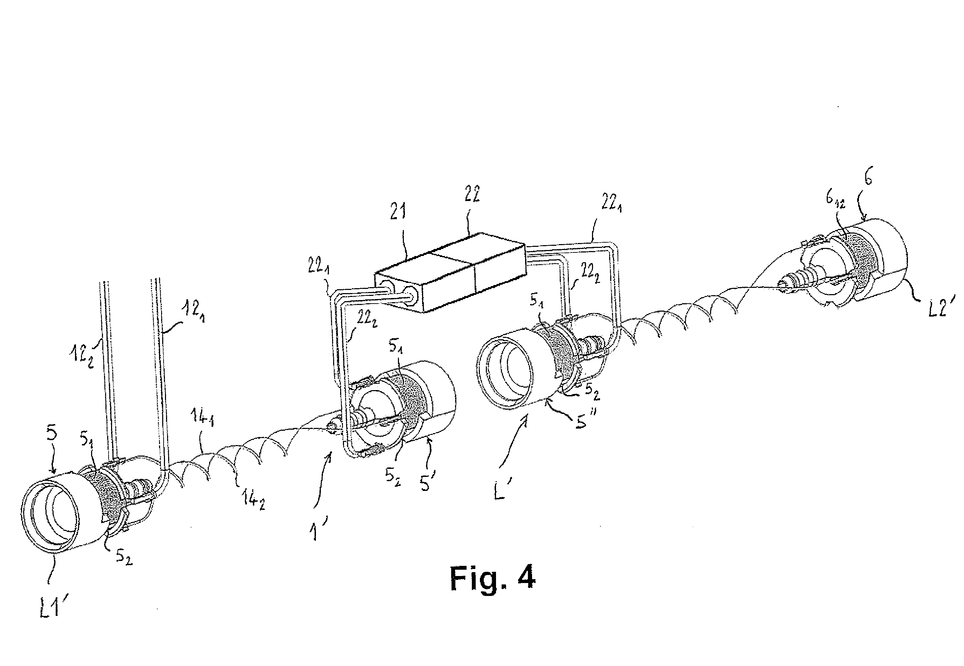

Dans la variante de l'invention illustrée aux figures 3 et 4, la ligne L' chauffée par le dispositif 1' selon l'invention comprend :
- deux tuyaux 2' et 2" dont l'un 2' est disposé entre un premier et un second organes 18 et 19 d'un véhicule automobile et dont l'autre est disposé entre ce second organe 19 et un troisième organe 20 de ce véhicule (seuls les paires de fils 14₁ et 14₂ destinés à les chauffer sont visibles à la figure 4), et
- quatre raccords à chauffer 5, 5', 5" et 6 qui sont par exemple inclus dans des connectiques rapides de ces tuyaux 2' et 2" et qui comprennent deux premier raccords intermédiaires 5' et 5' raccordés chacun à un tuyau 2', 2".

Plus précisément, ce dispositif 1' comprend :
- deux premiers raccords à chauffer 5 et 5' aux extrémités du tuyau 2' (i.e. chacun à deux cosses 5₁ et 5₂ séparées respectivement reliées aux deux fils 14₁ et 14₂ de ce tuyau 2'), dont l'un 5 forme la première extrémité de ligne L1' et est à ce titre alimenté électriquement par les câbles 12₁ et 12₂ et dont l'autre 5' occupe une position intermédiaire dans la ligne L', chacun de ces raccords 5, 5' étant analogue à celui précité en relation avec les figures 1 et 2,
- un autre premier raccord à chauffer 5" intermédiaire dans la ligne L', qui est monté à l'extrémité de l'autre tuyau 2" adjacente au raccord 5' et qui est relié à ce dernier par deux connecteurs électriques mâle 21 et femelle 22 branchés l'un dans l'autre et respectivement pourvus de câbles de connexion 21₁, 21₂ et 22₁, 22₂ aux cosses 5₁ et 5₂ des raccords 5' et 5", et
- un unique second raccord à chauffer 6 à l'autre extrémité de ligne L2' (i.e. à une seule cosse 6₁₂ reliée aux deux fils adjacents 14₁ et 14₂ de sorte à fermer le circuit électrique alimenté par les câbles 12₁ et 12₂) par exemple identique à celui de la figure 2.

On notera que ce dispositif 1' selon les figures 3 et 4 ne comporte avantageusement qu'une seule alimentation électrique 12₁ et 12₂ pour l'ensemble des deux tuyaux chauffants 2' et 2". On comprend ainsi qu'il est possible grâce au dispositif 1' selon l'invention de chauffer de manière satisfaisante l'intégralité de la ligne L' (tuyaux et connectiques rapides inclus) avec une seule paire de câbles d'alimentation électrique 12₁ et 12₂.

On notera également que cette variante des figures 3 et 4 est généralisable de la même manière à plus de deux tuyaux chauffants, étant précisé qu'il suffit d'ajouter entre deux tuyaux chauffants consécutifs un bloc de deux connecteurs électriques 21, 22 respectivement reliés aux deux cosses 5₁ et 5₂ des premiers raccords intermédiaires correspondants.

## Revendications

1. Dispositif de chauffage (1, 1') d'une ligne (L, L') de transfert de fluide, cette ligne comportant au moins un tuyau (2, 2', 2") et au moins deux raccords à chauffer (5, 5', 5" et 6) de ce(s) tuyau(x) montés en une première et une seconde extrémités opposées (L1 et L2, L1' et L2') de la ligne, ce dispositif comprenant :
- ces raccords qui comprennent au moins un premier raccord (5, 5', 5") destiné à être monté en ladite première extrémité et optionnellement entre deux tuyaux consécutifs (2' et 2") dans le cas de tuyaux connectés en série, et un unique second raccord (6) destiné à être monté en ladite seconde extrémité,
- au moins une paire d'éléments métalliques chauffants (14₁ et 14₂) qui sont destinés à être disposés le long du ou de chaque tuyau et qui sont connectés au ou à chaque premier raccord, la paire d'éléments chauffants adjacente à ladite seconde extrémité étant connectée en outre au second raccord, et
- des moyens d'alimentation électrique (12₁ et 12₂) agencés pour alimenter le premier raccord en ladite première extrémité,
**caractérisé en ce que** le ou chaque premier raccord (5, 5', 5") incorpore des moyens de connexion électrique (5₁, 5₂) qui sont connectés à la paire correspondante d'éléments chauffants pour la relier électriquement aux moyens d'alimentation, et **en ce que** l'unique second raccord (6) incorpore des moyens de fermeture (6₁₂) du circuit électrique formé par la ou les paire(s) d'éléments chauffants et par ces moyens de connexion, de telle sorte que le ou chaque tuyau chauffe les raccords correspondants via ces moyens de connexion et de fermeture.

2. Dispositif de chauffage (1, 1') selon la revendication 1, **caractérisé en ce que** ces moyens de connexion électrique (5₁, 5₂) et de fermeture (6₁₂) du circuit sont aptes à être chauffés par n tuyau(x) (2, 2', 2") (n entier égal ou supérieur à 1) de la ligne (L, L'), par l'intermédiaire de :
- liaisons électriques (13₁, 13₂, 13'₁, 13'₂, 15₁, 15₂) entre, d'une part, la paire d'éléments chauffants (14₁ et 14₂) du ou de chaque tuyau et, d'autre part, ces moyens de connexion électrique (5₁, 5₂) ou ces moyens de fermeture (6₁₂) selon la position du tuyau dans la ligne, et de
- câbles électriques (12₁ et 12₂) que comprennent les moyens d'alimentation et qui sont connectés aux moyens de connexion électrique du premier raccord à chauffer (5) situé en ladite première extrémité de ligne (L1, L1').

3. Dispositif de chauffage (1') selon la revendication 2, **caractérisé en ce que** dans le cas où n est égal ou supérieur à deux, deux tuyaux consécutifs (2' et 2") sont reliés entre eux via les moyens de connexion électrique respectifs (5₁, 5₂) qui équipent deux desdits premiers raccords intermédiaires adjacents (5' et 5") à chauffer et qui sont eux-mêmes reliés électriquement entre eux par deux connecteurs électriques (21 et 22) accouplés.

4. Dispositif de chauffage (1, 1') selon la revendication 2 ou 3, **caractérisé en ce que** lesdits moyens de connexion électrique comportent deux cosses métalliques (5₁, 5₂) séparées entre elles qui sont respectivement reliées, d'une part, aux deux câbles électriques (12₁ et 12₂) et, d'autre part, aux deux éléments chauffants (14₁ et 14₂) de ladite ou de chaque paire par lesdites liaisons électriques (13₁, 13₂, 13'₁, 13'₂), et **en ce que** lesdits moyens de fermeture du circuit comportent une unique cosse métallique (6₁₂) qui est reliée aux deux éléments chauffants correspondants.

5. Dispositif de chauffage (1, 1') selon la revendication 4, **caractérisé en ce que** chacune desdites cosses (5₁, 5₂, 6₁₂) est en forme de secteur de cylindre monté autour du raccord à chauffer (5, 5', 5", 6) correspondant et est calée dans une gorge circonférentielle (5a, 6a) de ce dernier, les deux cosses (5₁, 5₂) que comportent lesdits moyens de connexion électrique étant diamétralement opposées.

6. Dispositif de chauffage (1, 1') selon la revendication 5, **caractérisé en ce que** la ou chaque liaison électrique (13₁, 13₂, 13'₁, 13'₂, 15₁, 15₂) dont est pourvue chaque cosse (5₁, 5₂, 6₁₂) pour recevoir un élément chauffant (14₁, 14₂) est solidaire de cette cosse et la prolonge axialement vers le raccord adjacent (5, 5', 5", 6).

7. Dispositif de chauffage (1, 1') selon une des revendications 4 à 6, **caractérisé en ce que** l'une au moins desdites cosses (5₁, 5₂, 6₁₂) supporte en outre un composant de protection thermique et/ou un autre composant chauffant par exemple à coefficient de température positif, de sorte à assurer une protection contre la surchauffe, une autorégulation de la température dans la ligne (L, L') et/ou à ajouter localement de la puissance de chauffe, respectivement.

8. Dispositif de chauffage (1, 1') selon une des revendications 4 à 7, **caractérisé en ce que** chacun des premier(s) et second raccords à chauffer (5, 5', 5", 6) muni de la ou des cosse(s) correspondante(s) (5₁, 5₂, 6₁₂) est recouvert d'une douille (16) électriquement isolante définissant l'enveloppe radialement externe du raccord correspondant, et est pourvu d'un embout axial de raccordement (5b, 6b) par emmanchement au tuyau (2, 2', 2") correspondant.

9. Dispositif de chauffage (1, 1') selon la revendication 8, **caractérisé en ce qu'**un raccord rapide encliquetable (7) est monté via cette douille (16) sur l'un au moins de ces raccords à chauffer (5, 5', 5", 6) pour former une connectique rapide (3), ce raccord rapide étant optionnellement pourvu d'un dispositif témoin de bonne connexion (9) d'un embout mâle (8) dans ce raccord rapide.

10. Dispositif de chauffage (1, 1') selon une des revendications précédentes, **caractérisé en ce que** ladite ou chaque paire d'éléments chauffants comporte deux fils chauffants (14₁, 14₂) enroulés en hélice cylindrique qui sont de préférence destinés à être montés radialement à l'extérieur du tuyau (2, 2', 2") correspondant.

11. Dispositif de chauffage (1, 1') selon une des revendications précédentes, **caractérisé en ce qu'**il incorpore en outre le ou chaque tuyau (2, 2', 2") à chauffer de ladite ligne, lequel tuyau est de préférence réalisé en une matière plastique.

12. Dispositif de chauffage (1, 1') selon les revendications 10 et 11, **caractérisé en ce que** ladite ou chaque paire de fils chauffants (14₁, 14₂) sont enroulés en hélice cylindrique radialement à l'extérieur et au contact du tuyau (2, 2', 2") correspondant, un manchon (17) thermiquement isolant enserrant le ou chaque tuyau pourvu de ces fils.

13. Dispositif de chauffage (1, 1') selon les revendications 9 et 12, **caractérisé en ce que** ladite douille (16) relie le raccord rapide encliquetable (7) à ce manchon (17), de sorte à le rendre solidaire du ou de chaque tuyau (2, 2', 2").
